# EUROPEAN PATENT APPLICATION

(11) **EP 0 691 585 A2**
(43) Date of publication of application: **10.01.1996**
(21) Application number: 95110280.5
(22) Date of filing: 30.06.1995
(51) Int. Cl.: G03G 15/04, G03G 15/00

(54) **Apparatus for feeding scanned medium**

(30) Priority: 06.07.1994 JP 155048/94
(71) Applicant: FUJI PHOTO FILM CO., LTD., Kanagawa-ken, 250-01 (JP)
(72) Inventor: Kondoh, Masahiko, c/o Fuji Photo Film Co., Ltd., Ashigarakami-gun, Kanagawa-ken 258 (JP); Matsuba, Kikuo, c/o Meitec Corporation, Atsugi-shi, Kanagawa-ken 243-01 (JP)
(74) Representative: Grünecker, Kinkeldey, Stockmair & Schwanhäusser Anwaltssozietät

(57) **Abstract**

A feed apparatus for feeding a film has a feed drum (52) rotatable in the auxiliary scanning direction, a pair of nip rollers (54a, 54b; 122a, 122b) disposed above the feed drum (52) for holding the scanned medium against an outer circumferential surface of the feed drum (52) by gravity, and a moving mechanism (56) for moving the nip rollers (54a, 54b; 122a, 122b) toward and away from the outer circumferential surface of the feed drum (52). The nip rollers (54a, 54b; 122a, 122b) comprise respective tubular members (58a, 58b; 128a, 128b) of rubber for being directly held against a film (F), and respective core members (60a, 60b; 130a, 130b) of metal fitted respectively in the tubular members (58a, 58b; 128a, 128b). The nip rollers (122a, 122b) may comprise a plurality of individually rotatable rollers (124a, 124b), respectively.

## Description

### BACKGROUND OF THE INVENTION

### Field of the Invention:

The present invention relates to an apparatus for feeding a scanned medium in an auxiliary scanning direction by gripping the scanned medium with a feed drum which is rotated and nip rollers associated with the feed drum.

### Description of the Related Art:

There have widely been used recording apparatus for recording images on scanned mediums and reading apparatus for photoelectrically reading image information carried on scanned mediums. In each of such recording apparatus and reading apparatus, a light beam emitted from a light beam generator is applied through a light beam deflector and a scanning lens to scan a scanned medium in a main scanning direction, and the scanned medium is fed in an auxiliary scanning direction by an auxiliary scanning feed mechanism for recording an image on or reading an image from the scanned medium.

The auxiliary scanning feed mechanism usually employs a feed drum that is actuated to rotate and nip rollers movable toward and away from the feed drum, for gripping the scanned medium to feed the scanned medium in the auxiliary scanning direction.

The nip roller is normally biased toward the feed drum under resilient forces applied by springs or the like engaging respective opposite ends of the nip roller to hold the scanned medium reliably against the circumferential surface of the feed drum.

The nip roller is generally made of a rubber material to keep itself effective in feeding the scanned medium in coaction with the feed roller. Therefore, the opposite ends of the nip roller are pressed against the feed drum and elastically deformed thereby under the resilient forces applied by springs. When the opposite ends of the nip roller are elastically deformed under pressure, a central region of the nip roller is elastically deformed in a direction to relieve the elastic deformation of the opposite ends of the nip roller. Consequently, because the opposite ends and central region of the nip roller have different diameters, the nip roller has different surface speeds in the axial direction, tending to deform the scanned medium that is fed by the feed drum and the nip roller. As a result, the light beam is apt to scan the medium at inaccurate positions, failing to record image information accurately or reproduce image information accurately from the scanned medium while it is being fed in the auxiliary scanning direction. When color-separated films of four colors, i.e., cyan, magenta, yellow, and black (C, M, Y, BK) are to be successively produced using such an auxiliary scanning feed mechanism in a color platemaking process, if the films are deformed by the auxiliary scanning feed mechanism, then respective images on the films are out of register with each other when superimposed, resulting in a reduction in register accuracy.

### SUMMARY OF THE INVENTION

It is therefore an object of the present invention to provide a feed apparatus which has nip rollers uniformly pressed against the circumferential surface of a feed drum in any axial position on the nip rollers, thereby allowing a scanned medium to be fed highly accurately by the nip rollers and the feed drum, and which has a highly simplified arrangement.

To achieve the above object, there is provided in accordance with the present invention a feed apparatus for feeding a scanned medium in an auxiliary scanning direction while a light beam is being deflected and applied to the scanned medium in a main scanning direction substantially perpendicular to the auxiliary scanning direction, comprising a feed drum rotatable in the auxiliary scanning direction, a pair of nip rollers disposed above the feed drum for holding the scanned medium against an outer circumferential surface of the feed drum by gravity, and a moving mechanism for moving the nip rollers toward and away from the outer circumferential surface of the feed drum.

When the nip rollers are lowered by the moving mechanism, the nip rollers hold the scanned medium against the outer circumferential surface of the feed drum by gravity from above the feed drum. The scanned medium is then fed in the auxiliary scanning direction upon rotation of the feed drum. Since the nip rollers are held against the outer circumferential surface of the feed drum by gravity, the nip rollers are free of any localized irregular pressing forces, and are uniformly elastically deformed at any axial position therealong. Therefore, the surface speed of the nip rollers is uniform at any axial position therealong for feeding the scanned medium highly accurately. Inasmuch as no dedicated mechanism is needed to hold the nip rollers against the feed drum, the feed apparatus is highly simple in structure.

The above and other objects, features, and advantages of the present invention will become apparent from the following description when taken in conjunction with the accompanying drawings which illustrate preferred embodiments of the present invention by way of example.

### BRIEF DESCRIPTION OF THE DRAWINGS

FIG. 1 is a schematic elevational view, partly in cross section, of a recording apparatus which incorporates a feeding apparatus according to the present invention;
FIG. 2 is a perspective view of a feeding apparatus according to a first embodiment of the present invention;
FIG. 3 is a front elevational view of the feeding apparatus according to the first embodiment;
FIG. 4 is a front elevational view illustrative of the manner in which the feeding apparatus according to the first embodiment operates; and
FIG. 5 is a perspective view of a feeding apparatus according to a second embodiment of the present invention.

### DETAILED DESCRIPTION OF THE PREFERRED EMBODIMENTS

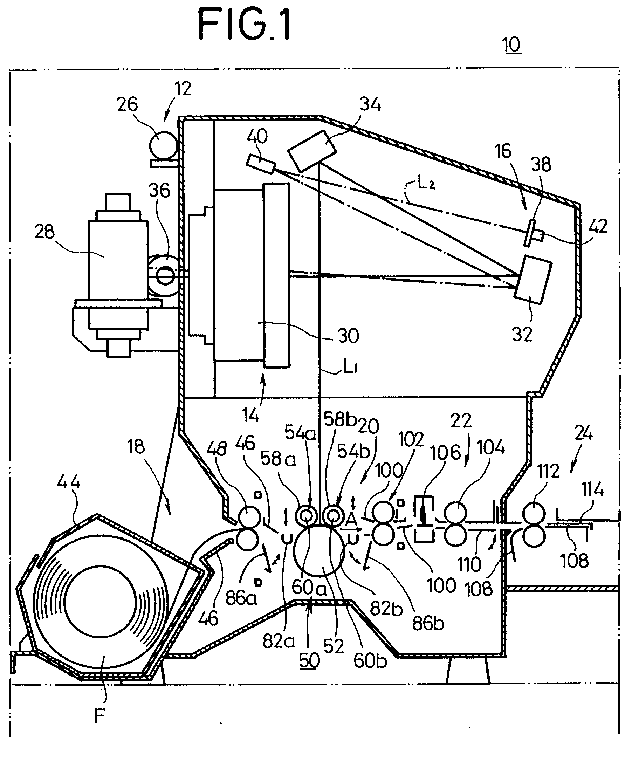

As shown in FIG. 1, a recording apparatus, generally indicated by the reference numeral 10, which incorporates a feed apparatus according to the present invention comprises a light beam generator 12 for emitting a recording light beam L₁ such as a laser beam, a scanning optical system 14 for scanning a film (scanned medium) F in a main scanning direction with the recording light beam L₁ emitted from the light beam generating means 12, a synchronizing signal generator 16 for generating a synchronizing signal to control the position of the recording light beam L₁, a film supply unit 18 for unwinding the film F from a film roll, a recorder 20 for recording an image on the film F supplied from the film supply 18, a film feeder and cutter 22 for feeding and cutting off the film F with the image recorded thereon to a predetermined length, and a discharger 24 for delivering the cut film F to an image developing apparatus (not shown).

The light beam generator 12 has a recording light source 26 such as a He - Ne laser or the like for emitting the recording light beam L₁. The scanning optical system 14 has a resonant light deflector 28 for reflecting and deflecting the recording light beam L₁ generated by the light beam generator 12 in the main scanning direction, an fθ lens 30 as a scanning lens, and a pair of reflecting mirrors 32, 34 for applying the recording light beam L₁ that has passed through the fθ lens 30 onto the film F in the recorder 20.

The synchronizing signal generator 16 has a synchronizing light source 36 for generating a synchronizing light beam L₂, a reference grating 38 having a plurality of slits (not shown) for being scanned by the synchronizing light beam L₂ emitted from the synchronizing light source 36, a reflecting mirror 40 for leading the synchronizing light beam L₂ reflected by the reflecting mirror 32 toward the reference grating 38, and a photosensor 42 for photoelectrically reading the synchronizing light beam L₂ that has passed through the reference grating 38.

The film supply unit 18 has a magazine 44 for storing the roll of film F, a plurality of guide plates 46 for guiding the film F unwound from the magazine 44, and a first pair of feed rollers 48 for gripping the leading end of the film F and feeding the film F toward the recorder 20.

The recorder 20 has a feed apparatus 50 according to a first embodiment of the present invention for feeding the film F in an auxiliary scanning direction (indicated by the arrow A) substantially perpendicular to the main scanning direction.

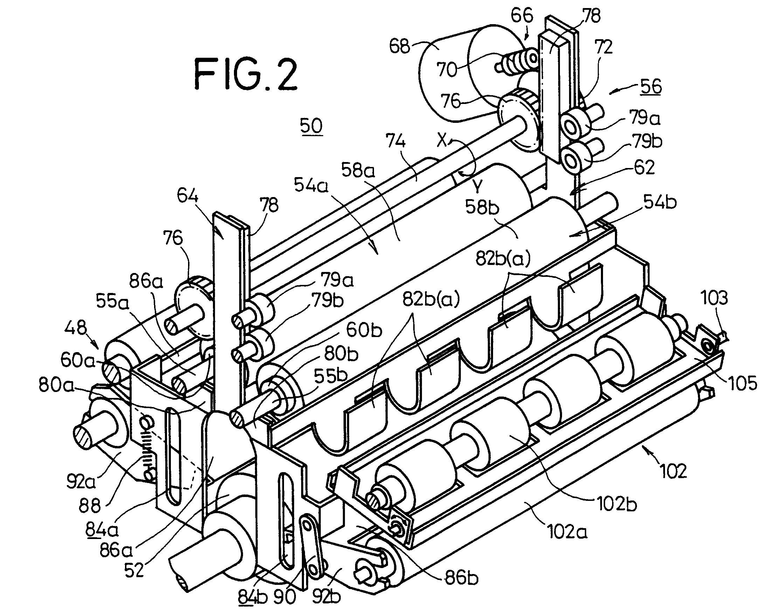

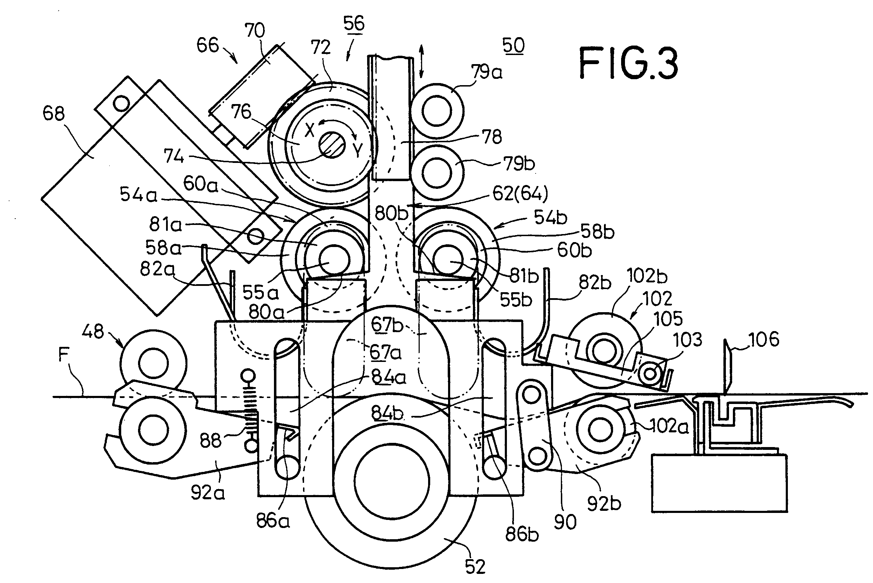

As shown in FIGS. 2 and 3, the feed apparatus 50 comprises a feed drum 52 of relatively large diameter which is actuated to rotate, a pair of nip rollers 54a, 54b disposed above and movable toward and away from the feed drum 52, and a moving mechanism 56 for moving the nip rollers 54a, 54b toward and away from the outer circumferential surface of the feed drum 52.

The nip rollers 54a, 54b comprise respective tubular members 58a, 58b of rubber for being directly held against the film F, respective core members 60a, 60b of metal fitted respectively in the tubular members 58a, 58b, and respective shafts 55a, 55b extending respectively through the core members 60a, 60b. The tubular members 58a, 58b may be made of neoprene, chloroprene, or NBR (butadiene-acrylonitrile rubber). The core members 60a, 60b may be made of any of various metals, and have a weight per unit length along their axes preferably ranging from 15 to 50 g/cm.

As shown in FIG. 2, the moving mechanism 56 comprises a pair of brackets 62, 64 spaced a distance from each other along the feed drum 52 and disposed parallel to each other, an actuator 66 for vertically moving the brackets 62, 64 in unison with each other, and a set of the vertically oblong guide grooves 67a, 67b for guiding the respective shafts 55a, 55b of the nip rollers 54a, 54b. The actuator 66 comprises a stepping motor 68 having a drive shaft with a worm 70 fixed thereto. A worm gear 72 held in mesh with the worm 70 is secured to an end of a rotatable shaft 74 on which a pair of axially spaced spur gears 76 is mounted. The spur gears 76 are held in mesh with respective racks 78 that are affixed to upper end portions, respectively, of the brackets 62, 64. The racks 78 are supported by guide rollers 79a, 79b.

The bracket 62 is in the form of a plate having a bifurcated lower end and includes a pair of slanted shoulders 80a, 80b near the bifurcated lower end for placing ends of the nip rollers 54a, 54b and biasing the nip rollers 54a, 54b in different directions along the circumferential direction of the feed drum 52. As shown in FIG. 3, the slanted shoulders 80a, 80b are inclined downwardly in outward directions. The nip rollers 54a, 54b placed on the respective shoulders 80a, 80b are supported by outer wall surfaces of the vertically oblong guide grooves 67a, 67b through respective bearings 81a, 81b that are mounted on the ends of the shafts 55a, 55b of the nip rollers 54a, 54b.

A pair of sets of presser guide members 82a, 82b, which are of an arcuately curved shape and spaced at certain intervals, is fixed to the bracket 62 closely the slanted shoulders 80a, 80b for pressing the film F against the outer circumferential surface of the feed drum 52. The bifurcated lower end of the bracket 62 has a pair of vertically elongate holes or slots 84a, 84b defined therein. Upstream and downstream guide plates 86a, 86b which are angularly movable in unison with vertical movement of the nip rollers 54a, 54b toward and away from the feed drum 52 engage in the vertically elongate holes or slots 84a, 84b. The upstream and downstream guide plates 86a, 86b are connected to upstream and downstream swingable plates 92a, 92b, respectively, by a spring 88 and a link 90.

The bracket 64 and various components associated therewith are identical in structure to those described above, and parts thereof which are identical to those of the bracket 62 and various associated components are denoted by identical reference numerals, and will not be described in detail below.

As shown in FIG. 1, the film feeder and cutter 22 comprises a plurality of guide plates 100, a second pair of feed rollers 102 and a third pair of feed rollers 104 which are spaced a distance from each other, and a cutter unit 106 disposed between the second pair of feed rollers 102 and the third pair of feed rollers 104. The second pair of feed rollers 102 has a drive roller 102a and a driven roller 102b (see FIGS. 2 and 3).

As shown in FIGS. 2 and 3, the driven roller 102b has an end engaging a substantially intermediate portion of a swing guide plate 105 which has an end supported by a pivot shaft 103 for angular movement about the pivot shaft 103. The other end of the swing guide plate 105 is engageable with the bifurcated lower ends of the brackets 62, 64. The swing guide plate 105 is swingable in synchronism with vertical movement of the brackets 62, 64 for displacing the driven roller 102b toward and away from the drive roller 102a.

The discharger 24 has a plurality of guide plates 108, a movable guide plate 110, a fourth pair of feed rollers 112, and a shutter 114 for selectively opening and closing a path which leads to the image developing apparatus.

Operation of the recording apparatus 10 in relation to the feed apparatus 50 will be described below.

The film F in the form of a roll is stored in the magazine 44, and the leading end of the film F is gripped by the first pair of feed rollers 48 (see FIG. 1). The leading end of the film F which is gripped by the first pair of feed rollers 48 is curled in a direction opposite to the direction in which the film F is rolled in the magazine 44. The nip rollers 54a, 54b are moved away from the feed drum 52, and the driven roller 102b of the second feed roller pair is moved away from the drive roller 102a thereof.

Specifically, as shown in FIG. 2, the stepping motor 68 is energized to rotate in one direction, causing the worm 70 and the worm gear 72 to rotate the shaft 74 in the direction indicated by the arrow X. The spur gears 76 mounted on the shaft 74 are rotated to elevate the racks 78 and hence the brackets 62, 64. The nip rollers 54a, 54b placed on the slanted shoulders 80a, 80b of the brackets 62, 64 are lifted away from the feed drum 52 while being guided by the guide grooves 67a, 67b, and the presser guide members 82a, 82b are also spaced away from the feed drum 52.

The upstream and downstream swing plates 92a, 92b are angularly moved upwardly until the upstream and downstream guide plates 86a, 86b are held in a substantially horizontal attitude (see FIG. 3). The ascending movement of the bracket 62 turns the swing guide plate 105 upwardly about the shaft 103, so that the driven roller 102b supported on the swing guide plate 105 is spaced upwardly from the drive roller 102a.

When the film F is unreeled from the magazine 44 by the first pair of feed rollers 48, the leading end of the film F passes between the second pair of feed rollers 102 into a certain position whereupon the driven roller 102b is displaced toward the drive roller 102a and the nip rollers 54a, 54b move toward the feed drum 52.

Specifically, the stepping motor 68 is energized to rotate in the opposite direction, rotating the shaft 74 in the direction indicated by the arrow Y. The brackets 62, 64 are lowered, and the nip rollers 54a, 54b are moved toward the feed drum 52, gripping the film F. The presser guide members 82a, 82b descend to press the film F against the outer circumferential surface of the feed drum 52. The upstream and downstream swing plates 92a, 92b are angularly moved downwardly, displacing the upstream and downstream guide plates 86a, 86b. The driven roller 102b is moved downwardly into coaction with the drive roller 102a for thereby gripping the film F therebetween.

When the film F is moved toward the recorder 20 upon rotation of the first pair of feed rollers 48, a certain length of the film F, which is determined in view of a required recording length, is drawn between the feed drum 52 and the first pair of feed rollers 48. The first pair of feed rollers 48 is now stopped against rotation, and the feed drum 52 is rotated at a relatively low speed. The film F is now fed in the auxiliary scanning direction indicated by the arrow A while being gripped between the nip rollers 54a, 54b and the feed drum 52.

When the synchronizing light source 36 is energized, it emits a synchronizing light beam L₂. The synchronizing light beam L₂ is reflected and deflected in a main scanning direction by the resonant light deflector 28, and then is caused by the fθ lens 30 and the reflecting mirrors 32, 40 to scan the reference grating 38. The synchronizing light beam L₂ passes through the slits of the reference grating 38, and is applied as a pulsed light signal to the photosensor 42. The photosensor 42 then generates a synchronizing signal which is applied to energize the recording light source 26. The recording light source 26 generates a recording light beam L₁, which after being modulated by an image to be recorded, is reflected and deflected in the main scanning direction by the resonant light deflector 28. The recording light beam L₁ passes through the fθ lens 30 and is reflected by the reflecting mirrors 32, 34 to scan the film F which is being fed in the auxiliary scanning direction A. Therefore, an image is two-dimensionally recorded on the film F based on the image information carried by the recording light beam L₁.

In this embodiment, the nip rollers 54a, 54b are composed of the respective tubular members 58a, 58b of rubber and the respective core members 60a, 60b of metal fitted therein, and grip the film F by gravity in coaction with the feed drum 52 at a position above the feed drum 52. Therefore, the tubular members 58a, 58b of rubber are held in direct engagement with the film F for effectively feeding the film F. The tubular members 58a, 58b of rubber are uniformly elastically deformable at any axial position therealong because no localized pressure (resilient forces or the like) is applied to the nip rollers 54a, 54b but only the weight of the core members 60a, 60b of metal acts on the nip rollers 54a, 54b uniformly over the entire axial length thereof.

Consequently, the nip rollers 54a, 54b rotate at a uniform surface speed over the entire axial length thereof, so that the film F gripped between the nip rollers 54a, 54b and the feed drum 52 can be fed accurately in the auxiliary scanning direction. The film F thus fed is free of any unwanted localized deformation which would otherwise be caused by different surface speeds of the nip rollers 54a, 54b. Since the film F as it is fed in the auxiliary scanning direction does not suffer localized deformations, it is scanned at a desired position thereon by the recording light beam L₁ for recording an image highly accurately and efficiently thereon.

When color-separated films of four colors, i.e., cyan, magenta, yellow, and black (C, M, Y, BK) are successively produced using the recording apparatus 10 in a color platemaking process, and then superimposed on each other, respective images on the films are held in register with each other, resulting in high register accuracy.

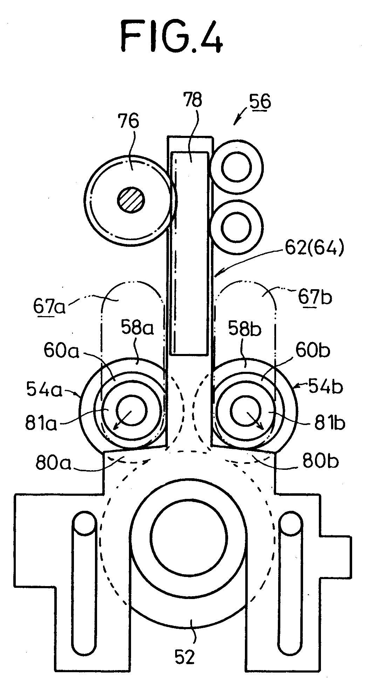

The nip rollers 54a, 54b placed on the slanted shoulders 80a, 80b which are inclined outwardly downwardly are supported by the outer wall surfaces of the vertically oblong guide grooves 67a, 67b through the respective bearings 81a, 81b that are mounted on the ends of the shafts 55a, 55b of the nip rollers 54a, 54b. Therefore, the nip rollers 54a, 54b are subject to forces acting, due to gravity, in different directions along the outer circumferential surface of the feed drum 52, as indicated by the arrows in FIG. 4. The film F between the nip rollers 54a, 54b is thus prevented from being lifted off the outer circumferential surface of the feed drum 52. The film F remains tautly pressed against the outer circumferential surface of the feed drum 52 and held in a scanning position where the film F is scanned by the recording light beam L₁. In addition, when the nip rollers 54a, 54b are lifted away from the feed drum 52, since they are not moved toward each other, the film F is prevented from being wrinkled by the nip rollers 54a, 54b.

The nip rollers 54a, 54b are vertically moved only by the moving mechanism 56, and grip the film F by gravity in coaction with the feed drum 52. Consequently, the feed apparatus 50 is highly simple in construction and can be manufactured highly inexpensively.

When the image has been recorded on the film F as described above, the recorded length of film F is accommodated between the second pair of feed rollers 102 and the feed drum 52. After the image recording process is finished, the first pair of feed rollers 48, the feed drum 52, the second pair of feed rollers 102, the third pair of feed rollers 104, and the fourth pair of feed rollers 112 are rotated to feed the film F until its leading end reaches a certain position near the shutter 114.

Then, only the second pair of feed rollers 102 and the third pair of feed rollers 104 are rotated to accommodate the recorded length of film F, which has been accommodated between the second pair of feed rollers 102 and the feed drum 52, between the third pair of feed rollers 104 and the fourth pair of feed rollers 112. The cutter 106 is actuated to cut off the film F to a predetermined length, and the shutter 114 is opened to allow the recorded length of film F to be fed toward the image recording apparatus by the fourth pair of feed rollers 112.

The nip rollers 54a, 54b and the driven roller 102b are elevated, the presser guide members 82a, 82b are elevated, and the upstream and downstream guide plates 86a, 86b are turned to a substantially horizontal attitude, by ascending movement of the brackets 62, 64. The first pair of feed rollers 48 is reversed to return the unrecorded film F toward the magazine 44, and the shutter 114 is then closed. The parts of the feed apparatus 50 are now in the condition in readiness for a next recording process.

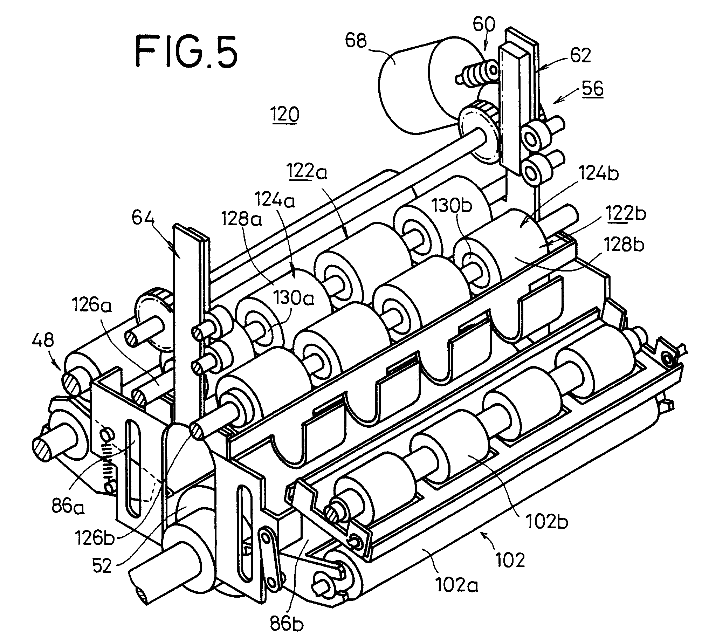

A feed apparatus 120 according to a second embodiment of the present invention will be described below with reference to FIG. 5. Those parts of the feed apparatus 120 which are identical to those of the feed apparatus 50 according to the first embodiment are denoted by identical reference numerals, and will not be described in detail below.

The feed apparatus 120 has a pair of vertically movable nip rollers 122a, 122b positioned above a feed drum 52. The nip roller 122a comprises a plurality of axially spaced rollers 124a, and the nip roller 122b comprises a plurality of axially spaced rollers 124b. The rollers 124a, 124b are individually rotatably mounted on respective shafts 126a, 126b. The rollers 124a, 124b comprise respective tubular members 128a, 128b of rubber for being directly held against a film F, and respective core members 130a, 130b of metal fitted respectively in the tubular members 128a, 128b.

As with the nip rollers 54a, 54b according to the first embodiment, the nip rollers 122a, 122b grip the film F by gravity in coaction with the feed drum 52. Therefore, the feed apparatus 120 is highly simple in construction and can feed the film F accurately. Because the nip rollers 122a, 122b are composed of individually rotatable rollers 124a, 124b, it is possible for the nip rollers 122a, 122b to have their outside diameters controlled more accurately than if they were composed of respective single rollers. Accordingly, the feed apparatus 120 can feed the film F highly accurately.

Although certain preferred embodiments of the present invention have been shown and described in detail, it should be understood that various changes and modifications may be made therein without departing from the scope of the appended claims.

## Claims

1. A feed apparatus for feeding a scanned medium in an auxiliary scanning direction while a light beam is being deflected and applied to the scanned medium in a main scanning direction substantially perpendicular to the auxiliary scanning direction, comprising:
a feed drum (52) rotatable in the auxiliary scanning direction;
a pair of nip rollers (54a, 54b; 122a, 122b) disposed above said feed drum (52) for holding the scanned medium against an outer circumferential surface of said feed drum (52) by gravity; and
a moving mechanism (56) for moving said nip rollers (54a, 54b; 122a, 122b) toward and away from the outer circumferential surface of said feed drum (52).

2. A feed apparatus according to claim 1, wherein said moving mechanism (56) comprises:
actuating means;
a bracket (62, 64) vertically movable by said actuating means; and
a pair of guide grooves (67a, 67b) for guiding shafts of said nip rollers (54a, 54b; 122a, 122b);
said bracket (62, 64) having a pair of slanted shoulders (80a, 80b), said shafts of said nip rollers (54a, 54b; 122a, 122b) being placed on the slanted shoulders (80a, 80b);
said nip rollers (54a, 54b; 122a, 122b) being held against the outer circumferential surface of said feed drum (52) while being subjected to forces by gravity in different directions along said slanted shoulders (80a, 80b).

3. A feed apparatus according to claim 2, wherein said moving mechanism further comprises a pair of presser guide members (82a, 82b) integral with said bracket (62, 64), the arrangement being such that when said bracket (62, 64) is lowered, said presser guide members (82a, 82b) are positioned one on each side of said feed drum (52) for pressing the scanned medium against the outer circumferential surface of said feed drum (52) over an angular range beyond positioned where said nip rollers (54a, 54b; 122a, 122b) contact said feed drum (52).

4. A feed apparatus according to claim 1, wherein said nip rollers (122a, 122b) comprise a plurality of individually rotatable rollers (124a, 124b), respectively.
